# EUROPEAN PATENT APPLICATION

(11) **EP 3 125 168 A1**
(43) Date of publication of application: **01.02.2017**
(21) Application number: 16174281.2
(22) Date of filing: 13.06.2016
(51) Int. Cl.: G06Q 10/06, G06Q 50/06

(54) **ENERGY MANAGEMENT SYSTEM**

(30) Priority: 29.07.2015 KR 20150107508
(71) Applicant: LSIS Co., Ltd., Gyeonggi-do 14119 (KR)
(72) Inventor: KIM, Tae-Seop, Gyeonggi-do 14118 (KR)
(74) Representative: Zacco Sweden AB

(57) **Abstract**

The present invention relates to an energy management system. The energy management system includes: a first energy management server (10a) configured to process data collected from a power system (20) and store the processed data in a database (11a); and a second energy management server (10b) configured to synchronize the data processed by the first energy management server (10a) in real time, wherein the first energy management server (10a) includes a dualization control unit (13a) configured to selectively transmit data for synchronization among the data stored in the database (11a) to the second energy management server (10b), depending on whether the data for synchronization are dynamic data or static data.

## Description

### BACKGROUND

### 1. Technical Field

The present invention relates to an energy management system and more particularly, to an operation of an energy management system with a dual server.

### 2. Description of the Related Art

Under circumstances of increased government regulation for improvement of energy efficiency and reduction of greenhouse gas, increased burden on energy costs, insufficient supply of power, and so on, there is a rising interest in reducing energy consumption and improving energy efficiency. Although the reduction of energy consumption requires measures which are systematic, sustainable and effective, satisfactory means have not been suggested until now. Therefore, for the purpose of reduction of energy consumption, there is a need of powerful means for determining where and how much energy is consumed, discovering factors of energy dissipation, and finding and fulfilling improvement plans.

As such means, an energy management system (EMS) capable of monitoring and controlling a flow of energy is receiving the global spotlight. The energy management system is an integrated energy management solution capable of optimizing energy consumption by monitoring situations of energy consumption in real time and analyzing an aggregation of data based on hardware, software and ICT-based monitoring and control techniques.

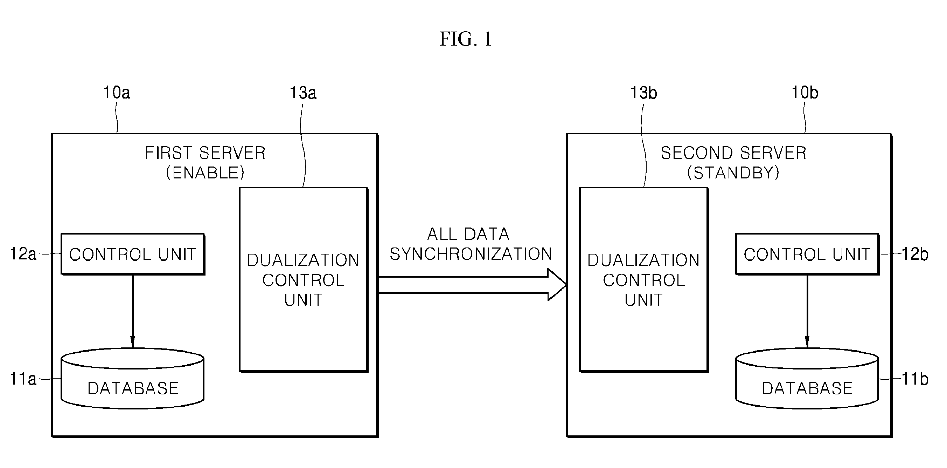

In a typical energy management system, as shown in Fig. 1, the entire data processed in a first server 10a are synchronized with a second server 10b without distinction. Specifically, the data processed by the first server 10a include dynamic data which are consistently changed and static data which are unchanged. Therefore, when dynamic data which are not consistently changed are synchronized for each determined period, a problem may occur that some processes of the first server 10a are unnecessarily performed.

In addition, it may take a long time for some data to be processed; in which case data stored in the first server 10a may match data synchronized with the second server 10b due to the long data processing time. Specifically, it may take a long time for the first server 10a to process data of two periods. In this case, while the first server 10a is processing the data of two periods, a synchronization period arrives and data of one period may be synchronized with the second server 10b. As a result, the data of two periods are stored in the first server 10a and the data of one period are stored in the second server 10b, which may result in data inconsistency.

Such data inconsistency may make it impossible to replace the first server 10a with the second server 10b if an abnormality occurs in the first server 10a. Specifically, data stored in the second server 10b in a standby mode are not synchronized with the first server 10a, thereby making it impossible to perform a proper data transferring operation. Further, this problem may lead to a doubtable situation in reliability of the overall system.

### SUMMARY

It is an aspect of the present invention to provide an energy management system which is capable of determining a data item to be synchronized with a standby server and selectively synchronizing only data corresponding to the determined data item.

It is another aspect of the present invention to provide an energy management system which is capable of storing data items to be synchronized and synchronizing data processed according to the stored data items.

It is another aspect of the present invention to provide an energy management system which is capable of receiving a data item to be synchronized from a user during operation of the energy management system and synchronizing data processed according to the received data item.

In accordance with one aspect of the present invention, there is provided an energy management system for using data to manage energy, including: a first energy management server configured to process data collected from a power system and store the processed data in a database; and a second energy management server configured to synchronize the data processed by the first energy management server in real time, wherein the first energy management server includes a dualization control unit configured to selectively transmit data for synchronization among the data stored in the database to the second energy management server, depending on whether the data for synchronization are dynamic data or static data.

In one embodiment, the dualization control unit may include a storage unit configured to store a synchronization object list for selection of data to be transmitted to the second energy management server, and the dualization control unit may selectively transmit data to the second energy management server based on the synchronization object list.

In one embodiment, the database of the first energy management server may contain the dynamic data whose values are changed for each predetermined period and the static data whose values are unchanged even with lapse of a predetermined period, and the synchronization object list stored in the storage unit may include a list related to the dynamic data.

In one embodiment, the dualization control unit may transmit the selected data to the second energy management server based on the synchronization object list at a request from the second energy management server.

In one embodiment, the dualization control unit may store the synchronization object list in the storage unit when the operation of the first energy management server is stopped.

In one embodiment, the energy management system may further include an input unit configured to receive an input to select a synchronization object list during the operation of the first energy management server.

In one embodiment, upon receiving a new synchronization object list from the input unit, the dualization control unit may transmit selected data to the second energy management server based on the new synchronization object list without operation stop of the first energy management server.

In accordance with another aspect of the present invention, there is provided an energy management server for using data to manage energy, including: a control unit configured to process data collected from a power system to create a database; and a dualization control unit configured to transmit the data processed by the control unit to another energy management server in a standby state, wherein the dualization control unit selectively transmits data for synchronization among the data stored in the created database to the another energy management server in the standby state, depending on whether the data for synchronization are dynamic data or static data.

### [Advantages of the Invention]

According to one embodiment of the present invention, it is possible to provide an energy management system which is capable of determining a data item to be synchronized with a standby server and selectively synchronizing only data corresponding to the determined data item.

According to one embodiment of the present invention, it is possible to provide an energy management system which is capable of storing data items to be synchronized and synchronizing data processed according to the stored data items.

According to one embodiment of the present invention, it is possible to provide an energy management system which is capable of receiving a data item to be synchronized from a user during operation of the energy management system and synchronizing data processed according to the received data item.

### BRIEF DESCRIPTION OF DRAWINGS

Fig. 1 is a block diagram showing a conventional data synchronization scheme in an energy management system.
Fig. 2 is a block diagram showing the configuration of an energy management system according to an embodiment of the present invention.
Fig. 3 is a block diagram of an energy management system including a dual server according to one embodiment of the present invention.
Fig. 4 is a flow chart showing an operation process of the energy management server according to one embodiment of the present invention.
Fig. 5 is a block diagram of an energy management system including a dual server according to another embodiment of the present invention.
Fig. 6 is a flow chart showing an operation process of the energy management server according to another embodiment of the present invention.

### DETAILED DESCRIPTION

Hereinafter, embodiments of the present invention will be described in detail with reference to the accompanying drawings. It should be understood that the present invention is not limited to the following embodiments, and that the embodiments are provided for illustrative purposes only. The scope of the invention should be defined only by the accompanying claims and equivalents thereof.

In the following description, the terms "module" and "part," which are suffixes for elements, are given or used alone or in combination for the purpose of facilitating the description, but these terms are not intended to make a distinction between both.

Combinations of blocks in the accompanying drawings and steps in a flow chart may be performed according to computer program instructions. These computer program instructions can be installed in general-purpose computers, special-purpose computers or other processors of programmable data processing equipment. Therefore, the instructions executed by the computers or other processors of programmable data processing equipment create means for performing functions described in blocks in the drawings or in steps in the flow chart. These computer program instructions can be stored in computer-usable or computer-readable memories which can assist in the computers or other processors of programmable data processing equipment to implement particular functions in particular manners. Therefore, the instructions stored in the computer-usable or computer-readable memories can be used to make products containing instruction means for performing the functions described in the blocks in the drawings or in the steps in the flow chart. The computer program instructions can also be installed in the computers or other processors of programmable data processing equipment. Therefore, a sequence of operation steps can be performed on the computers or other processors of programmable data processing equipment to produce computer-executable processes. In addition, the instructions operating the computers or other processors of programmable data processing equipment can provide steps for executing the functions described in the blocks in the drawings or in the steps in the flow chart.

In addition, the blocks or the steps may represent portions of modules, segments or codes including one or more executable instructions for executing a specified logical function(s). In addition, in some alternative embodiments, it should be noted that the functions described in the blocks or steps may be performed out of a specified sequence. For example, two successive blocks or steps may be performed substantially at once or may be sometimes performed in a reverse order depending on a corresponding function.

A majority of systems dualizes a server in the form of "Enable" and "Standby" in order to offer consistent services in preparation for failure of servers, equipment, software, and so on. An energy management system stores data processed by each process in an enable server and generates a database based on the stored data. However, if a failure occurs in the enable server, since the enable server has to be replaced with a standby server, the database containing the processed data has to be synchronized between the enable server and the standby server. At this time, the database to be synchronized may include a static area where the database is unchanged while the energy management system is operating and a dynamic area where the data processed by the processes are written and consistently changed.

If data synchronization between the enable server and the standby server is progressed with no distinction between the static area and the dynamic area, there is a problem that an unnecessary operation may be performed. Therefore, there is a need to select data to be synchronized from the entire database.

An embodiment of the present invention will now be described with reference to the drawings.

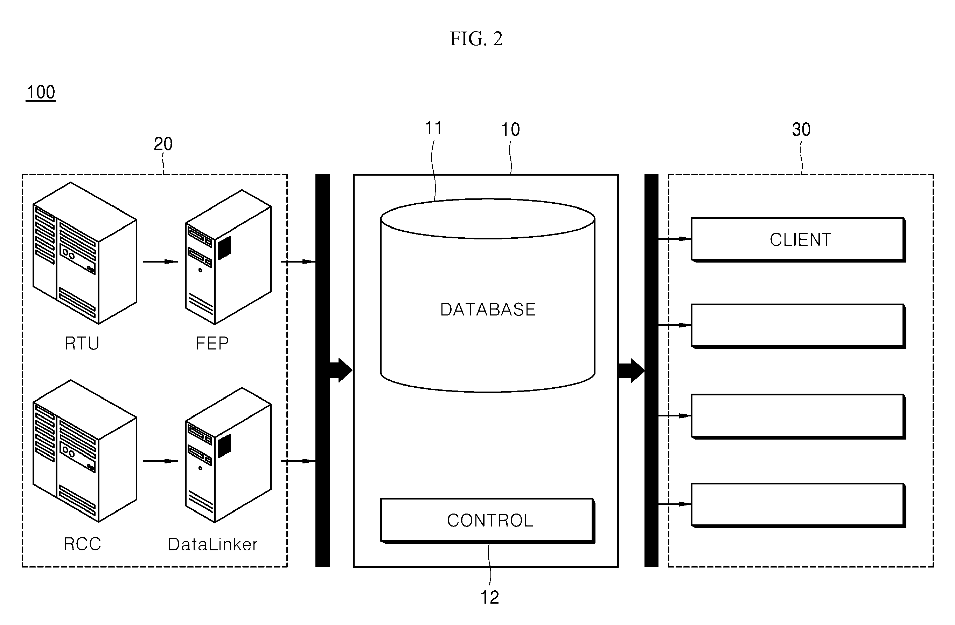

Fig. 2 is a block diagram showing the configuration of an energy management system according to an embodiment of the present invention.

Referring to Fig. 2, an energy management system 100 according to an embodiment of the present invention may include an energy management server 10, a client 30 and a power system 20.

The energy management server 10 can receive data from the power system 20 and create the data in the form of a database. In addition, the energy management server 10 can provide the database to the client 30. In addition, the energy management server 10 can manage and control the power system 20. The energy management server 10 may be connected to a plurality of clients 30. In addition, the energy management server 10 may have a dual structure.

The energy management server 10 may include a database 11 and a control unit 12.

The database 11 can collect/store measurement data received from the power system 20 and store operational data based on the measurement data for each predetermined period. In addition, the database 11 can automatically create and store a list of measurement and operational data and store a list of policy data.

The control unit 12 can control the overall operation of the energy management server 10. In some embodiments, the control unit 12 can create the database 11 by processing data delivered from the power system 20. In other embodiments, the control unit 12 can provide specified data to the client 30 at a request from the client 30.

A typical energy management system includes a first server in an enable state and a second server in a standby state. In general, an energy management system is a system for managing and monitoring a massive amount of energy and it is very important to operate the system consistently. Therefore, the energy management system may include an enable server and a standby server preparing for a failure of the enable server, which may be referred to as "server dualization."

In this case, the enable server performs an operation of the energy management server and the standby server prepares for an abnormal situation of the enable server in real time synchronization with data processed in the enable server. Since the standby server is in real time synchronization with data processed in the enable server, even if an abnormality occurs in the enable server, the standby server can take over the data without separate synchronization and operate the energy management system based on the taken-over data.

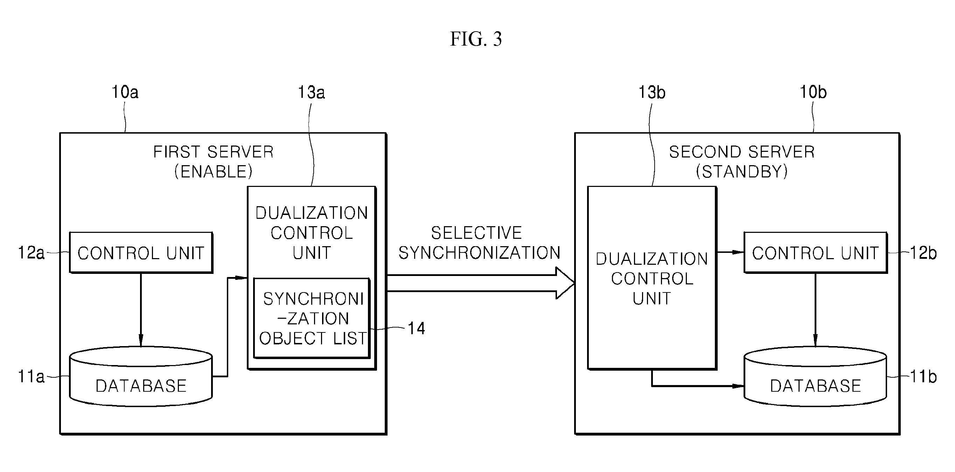

Hereinafter, one embodiment of the present invention to solve the above-described problem related to the server dualization of the conventional energy management system will be described with reference to Figs. 3 to 6.

Fig. 3 is a block diagram of an energy management system including a dual server according to one embodiment of the present invention.

As shown in Fig. 3, an energy management system according to one embodiment of the present invention may include a first server 10a in an enable state and a second server 10b in a standby state. The first server 10a and the second server 10b have been described earlier with reference to Fig. 2 and, therefore, explanation of which will not be repeated for the purpose of brevity.

An energy management server 10 (hereinafter abbreviated as a "server 10") of the energy management system may include a dualization control unit 13. The dualization control unit 13 controls data synchronization between dual servers. Specifically, a database 11 processed by a control unit 12 of the server 10 is transmitted to a server in a standby state. In one embodiment, a dualization control unit 13a of the first server 10a may perform database synchronization according to a set period. In another embodiment, the dualization control unit 13a may perform the database synchronization at a request for synchronization from a dualization control unit 13b of the second server 10b.

In one embodiment of the present invention, the dualization control unit 13a of the first server 10a may store a synchronization object list 14 which is a list of data to be delivered by the dualization control unit 13a of the first server 10a to the second server 10b. Specifically, data processed by a control unit 12a of the first server 10a may be divided into a plurality of items. As one example, the data processed by the control unit 12a may be divided into static data and dynamic data. As another example, the data processed by the control unit 12a may be divided into data for system monitoring and data for SCADA (Supervisory Control and Data Acquisition).

Therefore, the dualization control unit 13a of the first server 10a selects some data from a database 11a based on the stored synchronization object list 14 and transmit the selected data to the second server 10b.

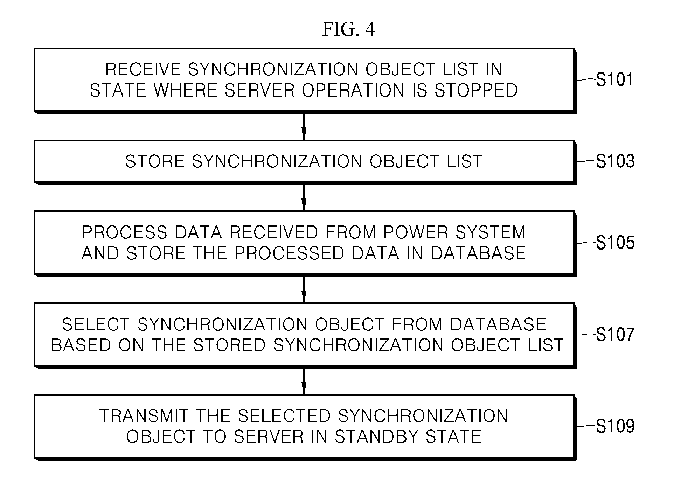

Fig. 4 is a flow chart showing an operation process of the energy management server according to one embodiment of the present invention.

The first server 10a receives a synchronization object list in a state where a server operation is stopped (S10l). An operation of storing the synchronization object list is to change setting of the server. Therefore, the first server 10a receives the synchronization object list in a state where the server operation is stopped in order to change and apply the server setting stably.

The first server 10a stores the received synchronization object list (S103). In one embodiment, the first server 10a may store the received synchronization object list in the dualization control unit 13a. In another embodiment, the first server 10a may include a storage unit for storing the synchronization object list and may store the synchronization object list in the storage unit. Specifically, the synchronization object list may be translated into a program language which can be embedded in the dualization control unit 13a. In addition, the synchronization object list may be varied over time. For example, the synchronization object list may contain contents of synchronization of data of items a and b in a first period and synchronization of data of only item b in a second period.

When the setting for the synchronization object list is completed, the first server 10a restarts, processes data received from a power system, and stores the processed data in the database 11a (S105). Specifically, the control unit 12a of the first server 10a processes the data received from the power system and stores the processed data in the database 11a. At this time, the data processed by the control unit 12a may include SCADA data and automatic generation control/economic dispatch data.

Once the processed data are stored in the database 11a, the dualization control unit 13a of the first server 10a selects a synchronization object from the database 11a based on the stored synchronization object list (S107). Specifically, the database 11a may contain data consisting of a plurality of items, which may be different in terms of processing time or a pattern of change.

In one embodiment, the data may be different in terms of time taken to be processed. Therefore, when it takes a long time to process the data, in one embodiment, the data may be selectively synchronized according to a period longer than a typical synchronization period. In another embodiment, the dualization control unit 13a of the first server 10a may selectively synchronize the data according to a data processing completion signal received from the control unit 12a.

In another embodiment, a period of change in a value of the data may be different. In other words, some data may be changed in its value for each predetermined period. Some data may not be changed in its value even with lapse of a predetermined period. Here, data whose value is changed for each predetermined period may be referred to as "dynamic data" and data whose value is not changed even with lapse of a predetermined period may be referred to as "static data." The term "predetermined period" used herein may refer to a period fixed in system setting. Therefore, the dynamic data whose value is consistently changed may be contained in the synchronization object list and the static data whose value is unchanged may not be contained in the synchronization object list.

In other embodiment, the above-mentioned data processing time may be classified by the length of time. Only data of processing time falling within a preset range of time may be contained in the synchronization object list and the static data whose value is unchanged may not be contained in the synchronization object list.

This allows the dualization control unit 13a of the first server 10a to transmit only data, whose processing time is short and whose synchronization has to be frequently performed for a short time, to the second server 10b, thereby achieving efficient data synchronization.

The dualization control unit 13a of the first server 10a transmits the synchronization object selected based on the synchronization object list to the second server 10b in the standby state (S107). At this time, the synchronization object list may be different for each period. Therefore, the dualization control unit 13a may select one of different synchronization objects for different periods and transmit the selected one to the second server 10b (S109).

However, the embodiment of Figs. 3 and 4 has an inconvenience in that the server has to restart in order to set the synchronization object list. For example, it is necessary to restart the server when an operator of the energy management system attempts to add/delete a synchronization object list to be synchronized. In addition, for such restart, the energy management system being properly operated has to be unnecessarily turned on/off, which may impose a burden on the overall system. In addition, there is no flexibility for the synchronization object list defined before start of the energy management system. Further, the operator of the energy management system cannot offer a visualized status of database synchronization and accordingly cannot check whether or not the database synchronization is properly performed, which may result in deterioration of system reliability.

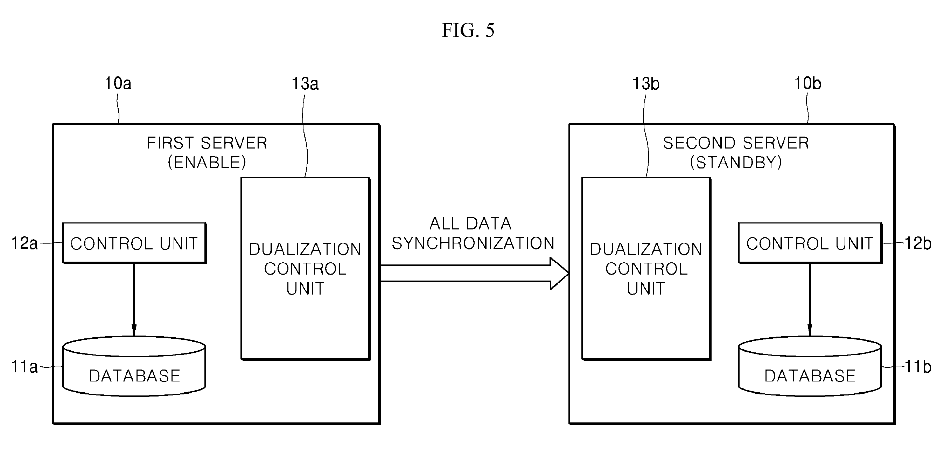

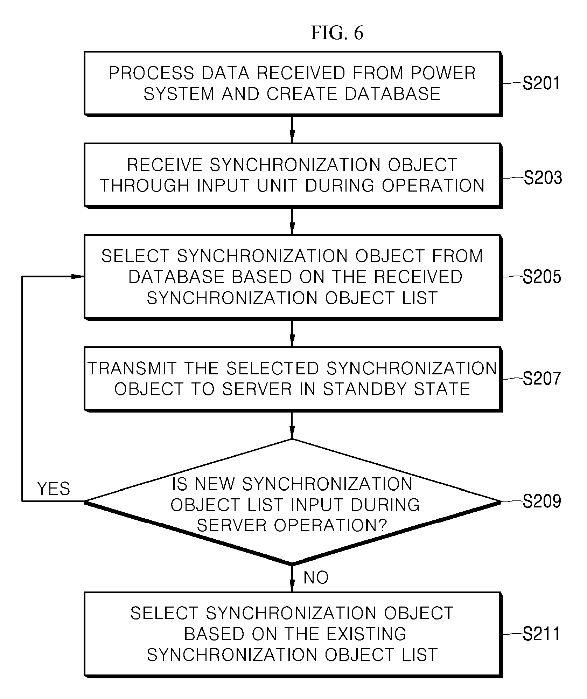

Hereinafter, another embodiment of the present invention to improve the embodiment of Figs. 3 and 4 will be described with reference to Figs. 5 and 6.

Fig. 5 is a block diagram of an energy management system including a dual server according to another embodiment of the present invention.

An energy management system according to the embodiment of Fig. 5 may further include an input unit 15 for receiving a synchronization object list 14, as compared to that of Fig. 3. The input unit 15 receives the synchronization object list 14 from a user without an operation stop of the energy management system. In one embodiment, the user may input the synchronization object list 14 through a menu displayed on a screen and the input unit 15 may create the synchronization object list 14 based on the input from the user. In other words, the input unit 15 can translate the synchronization object list 14 into a program language based on the user input. For example, synchronizable items may be displayed on the screen and the user may input the synchronization object list 14 in such a manner as to check an item to be synchronized.

The synchronization object list 14 created by the input unit 15 is delivered to the dualization control unit 13a of the first server 10a. As in the embodiment of Fig. 3, the dualization control unit 13a of the first server 10a can select an item to be synchronized from the database 11a based on the synchronization object list 14 and transmit the selected data to the second server 10b.

Fig. 6 is a flow chart showing an operation process of the energy management server according to another embodiment of the present invention.

The control unit 12a of the first server 10a in the enable state processes data received from a power system and stores the processed data in the database 11a (S201). The process of the control unit 12a to process the data and store the processed data in the database 11a is as described above and, therefore, explanation of which will not be repeated for the purpose of brevity.

The first server 10a receives a synchronization object through the input unit 15 during operation (S203). The first server 10a can receives the synchronization object through the input unit 15 during operation without an operation stop of the server. In one embodiment, the input unit 15 may receive an input from a user to select an item to be synchronized of data items displayed on a screen.

The dualization control unit 13a of the first server 10a selects a synchronization object from the database 11a based on a synchronization object list received from the input unit 15 (S205). The synchronization object list may contain a plurality of synchronization objects and the dualization control unit 13a may select only data contained in the synchronization object list among the plurality of synchronization objects. In one embodiment, the dualization control unit 13a can know addresses of a memory in which the data are stored. Then, the dualization control unit 13a can access the memory addresses of data corresponding to the synchronization object list to call the data for synchronization.

The dualization control unit 13a of the first server 10a transmits the selected synchronization object to the second server 10b in the standby state (S207). Specifically, the dualization control unit 13a can transmit the data called for synchronization object to the second server 10b. When the data are not entirely but selectively transmitted, it is possible to reduce an unnecessary load of the second server 10b in the standby state and improve the consistency between the data synchronized with the second server 10b and the data stored in the first server 10a.

The dualization control unit 13a of the first server 10a determines whether or not a new synchronization object list is input during the operation of server (S209). There may be a need to change a synchronization object during the operation of server. In this case, the new synchronization object list may be received from the user through the input unit 15. The dualization control unit 13a can determine whether or not a synchronization object list for selective synchronization is updated. In one embodiment, the synchronization object list may include version information and a version of the synchronization object list may be changed when a new synchronization object list is created. The dualization control unit 13a can determine whether or not the synchronization object list is updated, based on the version information.

If the synchronization object list is updated, the dualization control unit 13a returns to Step S205.

If the synchronization object list is not updated, the dualization control unit 13a selects a synchronization object based on the existing synchronization object list (S211). When the synchronization object is selected, the dualization control unit 13a returns to Step S207 to deliver the selected synchronization object to the second server 10b in the standby state.

While certain embodiments have been described, these embodiments have been presented by way of example only, and are not intended to limit the scope of the disclosures. Indeed, the novel methods and apparatuses described herein may be embodied in a variety of other forms; furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

## Claims

1. An energy management system for using data to manage energy, comprising:
a first energy management server (10a) configured to process data collected from a power system (20) and store the processed data in a database (11a); and
a second energy management server (10b) configured to synchronize the data processed by the first energy management server (10a) in real time,
wherein the first energy management server (10a) includes a dualization control unit (13a) configured to selectively transmit data for synchronization among the data stored in the database (11a) to the second energy management server (10b), depending on whether the data for synchronization are dynamic data or static data.

2. The energy management system according to claim 1, wherein the dualization control unit (13a) includes a storage unit configured to store a synchronization object list for selection of data to be transmitted to the second energy management server (10b), and
wherein the dualization control unit selectively transmits data to the second energy management server (10b) based on the synchronization object list.

3. The energy management system according to claim 2, wherein the database (11a) of the first energy management server (10a) contains the dynamic data whose values are changed for each predetermined period and the static data whose values are unchanged even with lapse of a predetermined period, and
wherein the synchronization object list stored in the storage unit includes a list related to the dynamic data.

4. The energy management system according to claim 2, wherein the dualization control unit (13a) transmits the selected data to the second energy management server (10b) based on the synchronization object list at a request from the second energy management server (10b).

5. The energy management system according to claim 2, wherein the dualization control unit (13a) stores the synchronization object list in the storage unit when the operation of the first energy management server (10a) is stopped.

6. The energy management system according to claim 1, further comprising an input unit (15) configured to receive an input to select a synchronization object list during the operation of the first energy management server (10a).

7. The energy management system according to claim 6, wherein, upon receiving a new synchronization object list from the input unit (15), the dualization control unit (13a) transmits selected data to the second energy management server (10b) based on the new synchronization object list without operation stop of the first energy management server (10a).

8. An energy management server for using data to manage energy, comprising:
a control unit (12) configured to process data collected from a power system (20) to create a database (11); and
a dualization control unit (13) configured to transmit the data processed by the control unit (12) to another energy management server in a standby state,
wherein the dualization control unit (13) selectively transmits data for synchronization among the data stored in the created database (11) to the another energy management server in the standby state, depending on whether the data for synchronization are dynamic data or static data.

9. The energy management server according to claim 8, wherein the dualization control unit (13) includes a storage unit configured to store a synchronization object list for selection of data to be transmitted to the another energy management server in the standby state.

10. The energy management server according to claim 8, further comprising an input unit (15) configured to receive an input to select a synchronization object list during the operation of the energy management server.
